(19)

Europäisches
Patentamt
European
Patent Office
Office européen
des brevets

(11) **EP 2 657 362 A1**

(12) **EUROPEAN PATENT APPLICATION**
published in accordance with Art. 153(4) EPC

(43) Date of publication:
**30.10.2013 Bulletin 2013/44**

(21) Application number: **11850736.7**

(22) Date of filing: **20.12.2011**

(51) Int Cl.:
**C22F 1/043** (2006.01)     **C22C 21/02** (2006.01)
**B21J 1/04** (2006.01)       **B21J 5/00** (2006.01)
**F16D 65/14** (2006.01)      **F16D 65/18** (2006.01)

(86) International application number:
**PCT/JP2011/079543**

(87) International publication number:
**WO 2012/086650 (28.06.2012 Gazette 2012/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2010 JP 2010285706**

(71) Applicant: **SHOWA DENKO K.K.
Minato-ku, Tokyo 105-8518 (JP)**

(72) Inventor: **HASHIMOTO Kakefumi
Kitakata-shi
Fukushima 966-0845 (JP)**

(74) Representative: **Viering, Jentschura & Partner
Grillparzerstrasse 14
81675 München (DE)**

(54) **METHOD FOR PRODUCING FORMED MATERIAL FOR BRAKE PISTON**

(57)     An aluminum alloy material comprising 9.0 to
11.0 mass% Si, at most 0.5 mass% Fe, 0.7 to 1.1 mass%
Cu, at most 0.15 mass% Mn, 0.3 to 0.7 mass% Mg, a
remainder of Al, and unavoidable impurities undergoes
a solutionizing treatment. The material is then cold
forged. The material subsequently undergoes an artificial
aging treatment. A formed material for a brake piston is
thereby obtained

EP 2 657 362 A1

FIG. 1

**Description**

**TECHNICAL FIELD**

The present invention relates to a method for producing a formed material for a brake piston made of aluminum alloy, and also relates to the formed material for a brake piston.

**BACKGROUND ART**

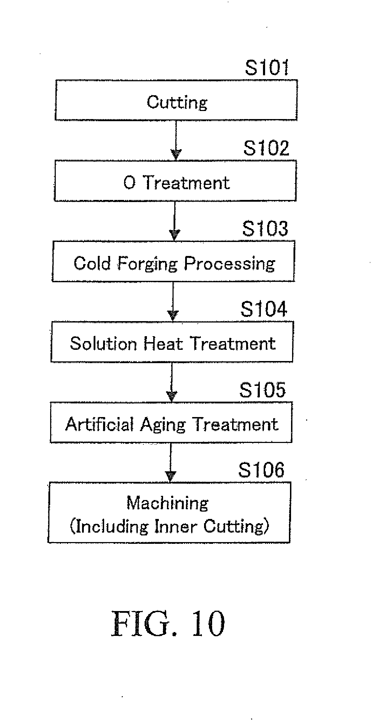

A conventional formed material for a brake piston made of aluminum alloy has a bottomed cylindrical shape, and is generally produced in accordance with a process sequence shown in Fig. 10. More specifically, in a cutting step S101, a rod-shaped aluminum continuous casting material, aluminum alloy extruded material, aluminum drawn material or the like is cut to thereby obtain a material. In an O treatment step S102, the material is subjected to O treatment. In a cold forging processing step S103, the material is cold forged into a bottomed cylindrical shape. In a solution heat treatment step S104, the material is solution heat treated. In an artificial aging treatment step S105, the material is artificially aged. In a machining step S106, the material is machined. The steps from the cold forging processing step S103 through the artificial aging treatment step S105 are generally called "T6 treatment".

Further, the type of a material which has been conventionally used in a formed material for a brake piston is an aluminum alloy A6061. There is known that the hardness of such a A6000 series aluminum alloy is affected by time between the solution heat treatment and the artificial aging treatment (that is, aging time of room temperature pre-aging treatment) and the amount of $Mg_2Si$ contained in the aluminum alloy (see Non Patent Documents 1 and 2, for example). More specifically, in an aluminum alloy containing approximately equal to or more than 1 mass% (or more than 0.9 mass%) of $Mg_2Si$, when the time (period) between the solution heat treatment and the artificial aging treatment is longer, the hardness of the material after being artificially aged becomes lower. On the other hand, in an aluminum alloy containing approximately less than 1 mass% (or less than 0.9 mass%) of $Mg_2Si$, when the time between the solution heat treatment and the artificial aging treatment is longer, the hardness of the material after being artificially aged becomes higher.

**PRIOR ART DOCUMENTS**

**NON PATENT DOCUMENTS**

Non Patent Document 1: "Structure and Property of Aluminium", edited by 40th Anniversary Commemorative Events Executive Committee, Editing Group Meeting, The Japan Institute of Light Metals, November 30, 1991, p. 282
Non Patent Document 2: "The Fundamentals of Aluminum Materials and Industrial Technology", edited by Japan Light Metal Association, 1st Ed., May 1, 1985, P. 169

**SUMMARY OF THE INVENTION**

**PROBLEMS TO BE SOLVED BY THE INVENTION**

However, the amount of $Mg_2Si$ contained in an aluminum alloy A6061 is approximately 1.3 to 1.9 mass%. Therefore, in a conventional aluminum alloy A6061 material, when the time between the solution heat treatment and the artificial aging treatment becomes longer, the hardness of the material after being artificially aged becomes lower. Thus, in order to obtain a formed material for a brake piston having high hardness, it is necessary to promptly and continuously perform the solution heat treatment and the artificial aging treatment after the cold forging processing, which causes a difficult task.

Further, in the conventional production method, it has been necessary to subject a material to the O treatment before the cold forging processing to improve the forging processability.

Further, since a material is distorted due to water quenching performed in the solution heat treatment, the circularity of an inner periphery of the material has been deteriorated. Therefore, it has been necessary to perform inner cutting for improving the circularity of the inner periphery of the material in the machining step S106.

The present invention has been made in view of the above technical background, and an object thereof is to provide a method for producing a formed material for a brake piston that can be easily produced without performing O treatment, and provide the formed material for a brake piston.

Other objects and advantages of the present invention will become apparent from the following preferred embodiment.

**MEANS FOR SOLVING THE PROBLEMS**

The present invention provides the following means.

[1] A method for producing a formed material for a brake piston, the method comprising: solution heat treating an aluminum alloy material containing 9.0 to 11.0 mass% Si, 0.50 mass% or less Fe, 0.7 to 1.1 mass% Cu, 0.15 mass% or less Mn, and 0.3 to 0.7 mass% Mg, with the balance being Al and inevitable impurities and thereafter; cold forging the material; and thereafter artificially aging the material.

[2] The method for producing a formed material for a brake piston according to the term [1], wherein the material is artificially aged under a condition of 210 ± 10ºC of aging temperature and 2 ± 0.5 hours of aging time.

[3] The method for producing a formed material for a brake piston according to the term [1] or [2], wherein the material is solution heat treated under a condition of 510 ± 10ºC of heat treatment temperature and 3 hours or more of heat treatment time.

[4] A method for producing a formed material for a brake piston, the method comprising production steps of: solution heat treating an aluminum alloy material containing 9.0 to 11.0 mass% Si, 0.5 mass% or less Fe, 0.7 to 1.1 mass% Cu, 0.15 mass% or less Mn, and 0.3 to 0.7 mass% Mg, with the balance being Al and inevitable impurities and thereafter; cold forging the material; and thereafter artificially aging the material under a condition for overaging treatment, wherein, in the production steps, hardness of the material at the time of starting the artificial aging treatment is set so that hardness of the material after being artificially aged becomes hardness required for a formed material for a brake piston, and 85 to 95% of peak hardness of the material during the artificial aging treatment, and a condition of the solution heat treatment is set so that hardness of the material after being solution heat treated becomes 40 to 65% of the hardness of the material at the time of starting the artificial aging treatment.

[5] A formed material for a brake piston, the material being produced by the method for producing a formed material for a brake piston according to any one of the terms [1] to [4].

[6] The formed material for a brake piston according to the terms [5], wherein electric conductivity of the material  is 40 to 45% IACS.

**EFFECTS OF THE INVENTION**

The present invention achieves the following effects.

In the method for producing a formed material for a brake piston according to the term [1], the amount of $Mg_2Si$ contained in the aluminum alloy constituting the material is approximately 0.4 to 0.9 mass%. Therefore, even when time between the solution heat treatment and the artificial aging treatment is long, the hardness of the material after being artificially aged is not reduced, and is substantially constant. That is, change with time of the hardness of the material after being solution heat treated is small. Therefore, there is enough time between the solution heat treatment and the artificial aging treatment. When the material is cold forged during the time between the solution heat treatment and the artificial aging treatment, the hardness of the material after being artificially aged is not reduced, but rather becomes higher due to work hardening by the cold forging processing. Therefore, a formed material for a brake piston having high hardness can be easily produced.

Further, by solution heat treating the material before the cold forging processing, the forging processability of the material is improved. Therefore, it is not necessary to  O treat the material before the cold forging processing, and the O treatment can therefore be omitted. Furthermore, since the solution heat treatment is performed not after the cold forging processing, but before the cold forging processing, and the artificial aging treatment is performed after the cold forging processing, distortion of the material hardly occurs, and the inner cutting for improving the circularity of the inner periphery of the material can also be omitted. Accordingly, the number of production steps can further be reduced. As a result, it is possible to further easily produce the formed material for a brake piston, and reduce the production cost thereof.

Further, by artificially aging the material, the hardness of the material promptly reaches the peak hardness (namely, a maximum value) during the artificial aging treatment. Therefore, the aging time of the artificial aging treatment can be reduced. As a result, the production cost can further be reduced.

With the production method according to the term [2], it is possible to more reliably produce a formed material for a brake piston having required hardness.

With the production method according to the term [3], it is possible to more reliably produce a formed material for a brake piston having required hardness.

With the production method according to the term [4], by subjecting the aluminum alloy material having the predetermined composition sequentially to the solution heat treatment, the cold forging processing treatment, and the artificial aging treatment under a predetermined condition, it is possible to optimize takt of an integrated production line of the formed material for a brake piston. The reason thereof is as follows. In this regard, in the following description, heat treatment temperature in the solution heat treatment is referred to as "the solution heat treatment temperature", and heat treatment time in the solution heat treatment is referred to as "the solution heat treatment time".

The aluminum alloy having the predetermined composition makes it possible to reduce change with time of the hardness of the material after the solution heat treatment. Therefore, T8 process can be employed as a production process of the formed material for a brake piston. That is, since the solution heat treatment is not performed after the cold forging processing, it is possible to start the artificial aging treatment immediately after the cold forging processing. Further, since the solution heat treatment is not performed after the cold forging processing, the hardness of the material promptly reaches the peak hardness during the artificial aging treatment. Therefore, it is possible to reduce the aging time in the artificial aging treatment.

The rate-limiting of the takt of the integrated production line of the formed material for a brake piston is heat treatment time, namely, the solution heat treatment time and the aging time of the artificial aging treatment. However, in order to achieve a sufficient dissolving state as solid solution, it is difficult to reduce the solution heat treatment time. On the other hand, since the production method according to the term [4] makes it possible to reduce the aging time of the artificial aging treatment, the aging time can be made shorter than the solution heat treatment time. Accordingly, the rate-limiting of the takt of the integrated production line of the formed material for a brake piston can be made to be the solution heat treatment time. In addition, it is possible to reduce the aging time of the artificial aging treatment so as to be equal to or shorter than the solution heat treatment time. Specifically, the aging time can be made to be 0.3 to 1 times of the solution heat treatment time. For example, when the solution heat treatment time is 3 to 5 hours, the aging time can be made to be $2 \pm 0.5$ hours. In this manner, it is possible to optimize (minimize) the takt of the integrated production line of the formed material for a brake piston.

Further, by making the hardness of the material after being artificially aged (namely, the formed material for a brake piston) become 85 to 95% of the peak hardness of the material during the artificial aging treatment, it is possible to obtain a formed material for a brake piston having required hardness and high thermal conductivity, namely, high heat dissipation.

The formed material for a brake piston according to the term [5] achieves the same effects as the effects achieved by the method for producing a formed material for a brake piston according to any one of the terms [1] to [4].

According to the formed material for a brake piston according to the above term [6], since the electric conductivity is 45 to 45% IACS, it is possible to obtain a formed material for a brake piston having high thermal conductivity, namely, high heat dissipation.

## BRIEF EXPLANATION OF THE DRAWINGS

Fig. 1 is a process chart illustrating a method for producing a formed material for a brake piston according to an embodiment of the present invention.

Fig. 2A is a cross-sectional view of a cold forging processing apparatus illustrating a state before a material is pressed by a punch in cold forging processing.

Fig. 2B is a cross-sectional view of the cold forging processing apparatus illustrating a state after the material is pressed by the punch in the cold forging processing.

Fig. 2C is a perspective view of the material before being pressed by the punch in the cold forging processing.

Fig. 2D is a perspective view of the material after being pressed by the punch in the cold forging processing.

Fig. 3 is a diagram (graph) illustrating the comparison of the circularity of an inner periphery of a material after being artificially aged between Example 1 and Comparative Example 1.

Fig. 4A is a diagram (graph) illustrating the electric conductivity of a material of Example 4.

Fig. 4B is a diagram (graph) illustrating the electric conductivity of a material of Comparative Example 2.

Fig. 5 is a diagram (graph) illustrating the comparison of a relationship between aging time in artificial aging treatment and the hardness of a material between Example 5 and Comparative Example 3.

Fig. 6 is a diagram (graph) illustrating a relationship between aging time in artificial aging treatment and the hardness of a material in Example 6.

Fig. 7A is a diagram (graph) illustrating aging curves when aging temperature is changed.

Fig. 7B is a diagram (graph) illustrating aging curves when the hardness of a material at the time of starting artificial aging treatment is changed.

Fig. 8 is a diagram (graph) illustrating the electric conductivity (relative IACS) and the hardness (relative HRB) of a material of Example 9 shown in Table 7.

Fig. 9 is a diagram (graph) illustrating a relationship between solution heat treatment temperature applied in each of Reference Examples 1 to 3 and the hardness of a material after being solution heat treated shown in Table 8.

Fig. 10 is a process chart illustrating a conventional method for producing a formed material for a brake piston.

**EMBODIMENTS FOR CARRYING OUT THE INVENTION**

Next, an embodiment of the present invention will be described below with reference to the drawings.

A formed material for a brake piston according to the embodiment of the present invention is made of aluminum alloy and has a bottomed cylindrical shape. The type of a material used for producing the formed material is an aluminum alloy having the following composition. That is, the material is an aluminum alloy containing 9.0 to 11.0 mass% Si, 0.50 mass% or less Fe, 0.7 to 1.1 mass% Cu, 0.15 mass% or less Mn and 0.3 to 0.7 mass% Mg, with the balance being Al and inevitable impurities. In the present specification, the requirement for this composition is referred to as "the composition requirement for aluminum alloy" for convenience of explanation.

The following is the reason why the range of the content of each of the above additive elements is defined as above in this aluminum alloy.

When the Si content is within the range of 9.0 to 11.0 mass%, the wear resistance is improved. When the Si content  is less than 9.0 mass%, the wear resistance cannot be improved. When the Si content exceeds 11.0 mass%, the forging processability and the formability are deteriorated.

When the Fe content is 0.50 mass% or less, the mechanical strength is not reduced, but the heat resistance is improved. When the Fe content exceeds 0.50 mass%, many crystallized substances containing Fe are generated, which results in reduction of the mechanical strength.

When the Cu content is within the range of 0.7 to 1.1 mass%, it is possible to form a hard anodized film on the surface of a material. When the Cu content is less than 0.7 mass%, the mechanical strength is reduced. When the Cu content exceeds 1.1 mass%, the hardness of the anodized film is reduced.

When the Mn content is 0.15 mass% or less, the mechanical property is not deteriorated, but the heat resistance is improved. When the Mn content exceeds 0.15 mass%, the mechanical property (especially, the forging processability) is deteriorated.

When the Mg content is within the range of 0.3 to 0.7 mass%, the mechanical strength is improved. When the Mg content is less than 0.3 mass%, the mechanical strength is reduced. When the Mg content exceeds 0.7 mass%, the crystallization amount of intermetallic compounds increases, which results in a fragile aluminum alloy.

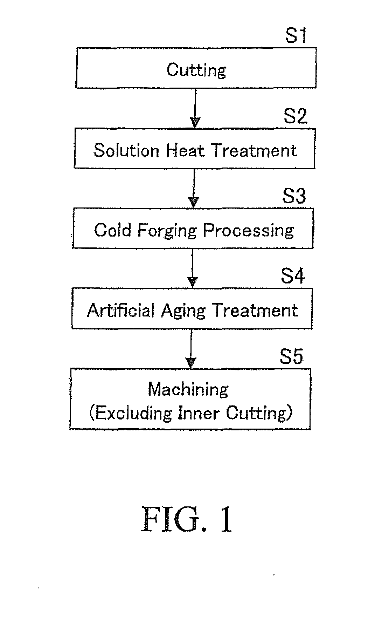

The formed material for a brake piston of the present  embodiment is produced using an aluminum alloy material having the above composition in accordance with a process sequence shown in Fig. 1. More specifically, as shown in Fig. 1, a method for producing the formed material for a brake piston of the present embodiment includes a production process including a cutting step S1, a solution heat treatment step S2, a cold forging processing step S3, an artificial aging treatment step S4, and a machining step S5.

Generally, a process in which a material is sequentially subjected to solution heat treatment, cold processing treatment, and artificial aging treatment is called "T8 process". Further, a treatment of the material performed in accordance with the T8 process is called "T8 treatment". Therefore, the formed material for a brake piston of the present embodiment is produced in accordance with a production process including the T8 process.

Further, in the production process, the hardness of a material at the time of starting the artificial aging treatment is desirably set so that the hardness of a material which is obtained by artificially aging the material (namely, the hardness of the material after being artificially aged) becomes a hardness required for a formed material for a brake piston, and also becomes 85 to 95% (particularly desirably 86 to 93%) of peak hardness of the material during the artificial aging treatment. Further, a condition of the solution heat treatment  is desirably set so that the hardness of a material which is obtained by solution heat treating the material (namely, the hardness of the material after being solution heat treated) becomes 40 to 65% (particularly desirably 45 to 62%) of the hardness of the material at the time of starting the artificial aging treatment. This makes it possible to reliably obtain a formed material for a brake piston having a required hardness. In order to reliably achieve such an effect, the production process is preferably performed in the flowing manner.

In the cutting step S1, a rod-shaped aluminum continuous casting material, aluminum alloy extruded material, aluminum drawn material or the like is cut to thereby obtain a material having a predetermined shape and a predetermined size. The shape of the material is generally a discoid shape or a columnar shape.

In the solution heat treatment step S2, the material which has been obtained in the cutting step S1 is not O treated, but solution heat treated. Accordingly, the forging processability of the material is improved. On the other hand, when the material is not solution heat treated, the forging processability of the material is deteriorated, which makes it difficult to cold forge the material into a bottomed cylindrical shape. In addition, the sizes of precipitation substances become non-uniform, which causes insufficient hardness of the material.

In a preferred condition of the solution heat treatment, the heat treatment temperature is 510 ± 10ºC (namely, 500 to 520ºC), the heat treatment time is 3 hours or more, and a particularly preferred water temperature in water quenching is 25 to 60ºC. By setting the heat treatment temperature at 510 ± 10ºC, it is possible to reliably dissolve the additive elements of the aluminum alloy as solid solution. Therefore, by artificially aging the material after the solution heat treatment, it is possible to reliably obtain fine and uniform precipitation substances. As a result, the hardness can be reliably improved. The heat treatment temperature is particularly desirably 510 ± 5ºC. When the heat treatment time is 3 hours or more, it is possible to reliably obtain fine and uniform precipitation substances. As a result, the hardness can be reliably improved. Although an upper limit of the heat treatment time is not limited to any particular value, a production cost increases when the heat treatment time is made longer. Therefore, in order to prevent the cost increase, the upper limit of the heat treatment time is particularly desirably 5 hours. That is, the heat treatment time is particularly desirably within the range of 3 to 5 hours. When the water temperature in water quenching is set within the range of 25 to 60ºC, it is possible to reliably obtain fine and uniform precipitation substances. As a result, the hardness can be reliably improved.

In the cold forging processing step S3, the material which has been solution heat treated in the solution heat treatment step S2 is cold forged into a bottomed cylindrical shape. This makes it possible to improve the mechanical strength of the bottomed cylindrical material by work hardening. On the other hand, when the material is not cold forged, not only it is not possible to form the material into a bottomed cylindrical shape, but it is not even possible to improve the mechanical strength by work hardening.

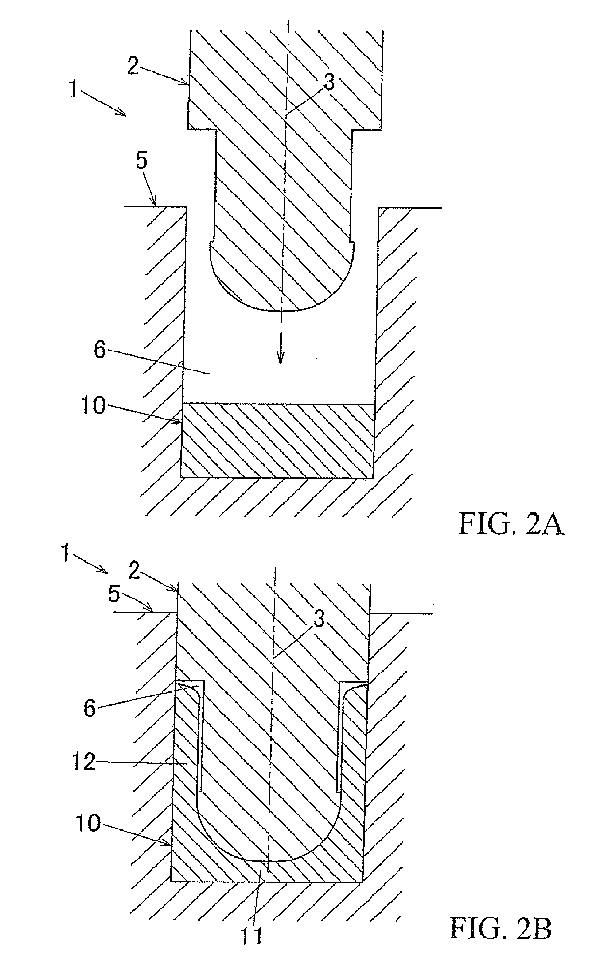

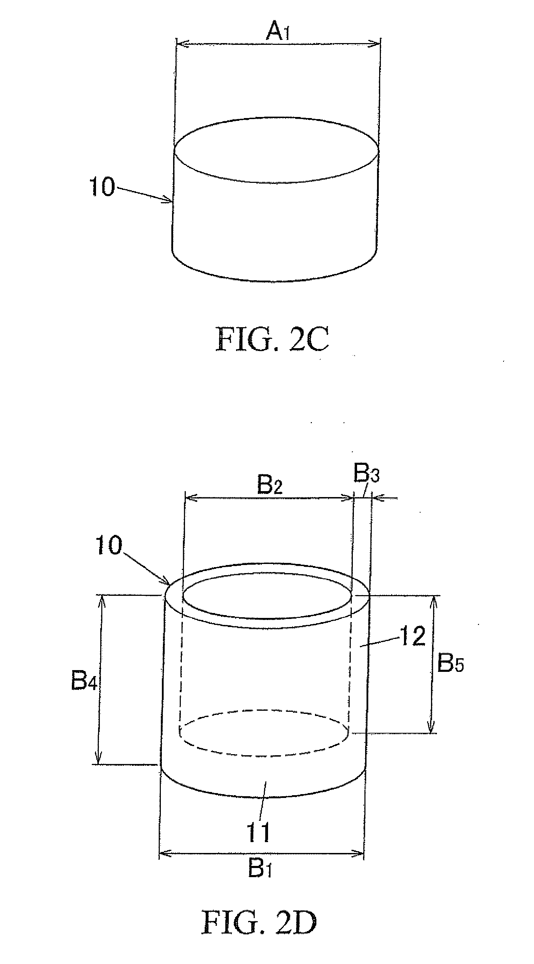

More specifically, the cold forging processing is closed-type backward extrusion cold forging processing, and performed by, for example, a cold forging processing apparatus (more specifically, a backward extrusion cold forging processing apparatus) 1 shown in Figs. 2A and 2B. The apparatus 1 is provided with a punch 2 and a molding die 5. The molding die 5 includes a molding cavity 6. A reference numeral 3 indicates the axis of the punch. A reference numeral 10 indicates a material. When performing the cold forging processing, lubricating treatment such as bonderizing is previously applied throughout the entire surface of the material 10. In Fig. 2A, the material 10 is arranged inside the molding cavity 6 of the molding die 5. Further, when the material 10 is pressed by the punch 2, the molding cavity 6 becomes a closed state as shown in Fig. 2, and the material 10 is backward extrusion forged into a bottomed cylindrical shape inside the cavity 6.

The forging processing rate of the cold forging processing is desirably within the range of 40 to 60% (particularly desirably 45 to 55%) since the dimensional accuracy of the forging processing can be reliably improved within such a range. The material 10 which has been cold forged has a bottomed cylindrical shape as described above. More specifically, the material 10 includes a discoid bottom wall 11 and a cylindrical peripheral wall 12 which is integrally formed with the outer peripheral edge of the bottom wall 11. Further, the bottom wall 11 of the material 10 corresponds to a crown portion of a brake piston (the formed material for the brake piston), and the peripheral wall 12 of the material 10 corresponds to a skirt portion of the brake piston (the formed material for the brake piston).

Fig. 2C is a perspective view of the material 10 before being pressed by the punch 2 in the cold forging processing. The shape of the material 10 is a discoid shape or a columnar shape. A diameter A1 of the material 10 is, for example, 40 to 50 mm.

Fig. 2D is a perspective view of the material 10 after being pressed by the punch 2 (namely, the material 10 which has been cold forged) in the cold forging processing. An outer diameter B1 of the material 10 is, for example, 40 to 55 mm. An inner diameter B2 of the material 10 is, for example, 25 to 40mm. A thickness B3 of the peripheral wall 12 of the material 10 is, for example, 5 to 15 mm. A length (height) B4 of the material 10 is, for example, 30 to 45 mm. A depth B5 of a hollow part of the material 10 is, for example, 25 to 40 mm.

In the artificial aging treatment step S4, the material 10 which has been cold forged in the cold forging processing step S3 is artificially aged. This makes it possible to reliably obtain fine and uniform precipitation substances. As a result, the mechanical strength such as the hardness can be reliably improved. On the other hand, when the material is not artificially aged, the sizes of the precipitation substances become non-uniform. Therefore, the precipitation substances grow and the like when using the brake piston, which reduces the mechanical strength.

In a preferred condition of the artificial aging treatment, the aging temperature is 210 ± 10ºC (namely, 200 to 220ºC), and the aging time is 2 ± 0.5 hours (namely, 1.5 to 2.5 hours). By setting the aging time at 210 ± 10ºC, it is possible to reliably ensure the characteristics such as the hardness required for the formed material for a brake piston (namely, the brake piston). When the aging time is 2 ± 0.5 hours, it is possible to reliably obtain fine and uniform precipitation substances. As a result, the mechanical strength such as the hardness can be reliably improved. The aging temperature is particularly desirably 210 ± 5ºC.

Generally, a formed material for a brake piston has to be artificially aged under the condition for overaging treatment due to a request in usage environment thereof. Therefore, it is necessary to artificially aging the material for a period of time that is longer than an aging time within which the hardness of the material becomes its peak hardness during the artificial aging treatment. However, in the present embodiment, the hardness of the material promptly reaches the peak hardness (namely, a maximum value) during the artificial aging treatment. Therefore, the aging time in the artificial aging treatment can be reduced.

In the machining step S5, the material which has been artificially aged in the artificial aging treatment step S4 is machined into a predetermined shape. The machining includes outer cutting for improving the circularity of an outer periphery of the material, polishing and the like. However, the machining does not include inner cutting for improving the circularity of an inner periphery of the material. That is, since the solution heat treatment is preformed not after the cold forging processing, but before the cold forging processing, and the artificial aging treatment is performed after the cold forging processing, the circularity of the inner periphery of the material after being artificially aged is high. Therefore, it is not necessary to perform the inner cutting on the material in the machining step S5.

Further, although not shown in Fig. 1, the material is anodized after the machining step S5 as necessary to thereby form an anodized film on the surface of the material. At this time, since the amount of Cu contained in the aluminum alloy constituting the material is set within the range of 0.7 to 1.1 mass%, it is possible to reliably form a hard anodized film.

The formed material for a brake piston is produced so as to have 40 to 45% IACS of electric conductivity through the above steps. Therefore, it is possible to produce a formed material for a brake piston having high thermal conductivity, namely having high heat dissipation. In this regard, "IACS" is an abbreviation of International Annealed Copper Standard.

The method for producing a formed material for a brake piston of the above embodiment has the following advantages.

Since the amount of $Mg_2Si$ contained in the aluminum alloy constituting the material is approximately 0.79 mass%, even when time (period) between the solution heat treatment and the artificial aging treatment is long, the hardness of the material after being artificially aged is not reduced, and is substantially constant. That is, change with time of the hardness of the material after the solution heat treatment is small. Therefore, there is enough time between the solution heat treatment and the artificial aging treatment. When the material is cold forged during the time between the solution heat treatment and the artificial aging treatment, the hardness of the material after being artificially aged is not reduced, but rather becomes higher due to work hardening by the cold forging processing. Therefore, a formed material for a brake piston having high hardness can be easily produced.

Further, by solution heat treating the material, the forging processability of the material is improved. Therefore, it is not necessary to O treat the material before the cold forging processing, and the O treatment can therefore be omitted. Furthermore, as described above, since the solution heat treatment is performed not after the cold forging processing, but before the cold forging processing, the inner cutting for improving the circularity of the inner periphery of the material can also be omitted when the machining is performed. Accordingly, the number of production steps can further be reduced. As a result, it is possible to easily produce the formed material for a brake piston, and also reduce the production cost thereof.

Further, as described above, by artificially aging the material, the hardness of the material promptly reaches the peak hardness (namely, the maximum value) during the artificial aging treatment. Therefore, the aging time of the artificial aging treatment can be reduced. As a result, the production cost can further be reduced.

Further, by subjecting the aluminum alloy material having the predetermined composition sequentially to the solution heat treatment, the cold forging processing treatment, and the artificial aging treatment under a predetermined condition, it is possible to optimize takt of an integrated production line of the formed material for a brake piston. The reason thereof is as follows.

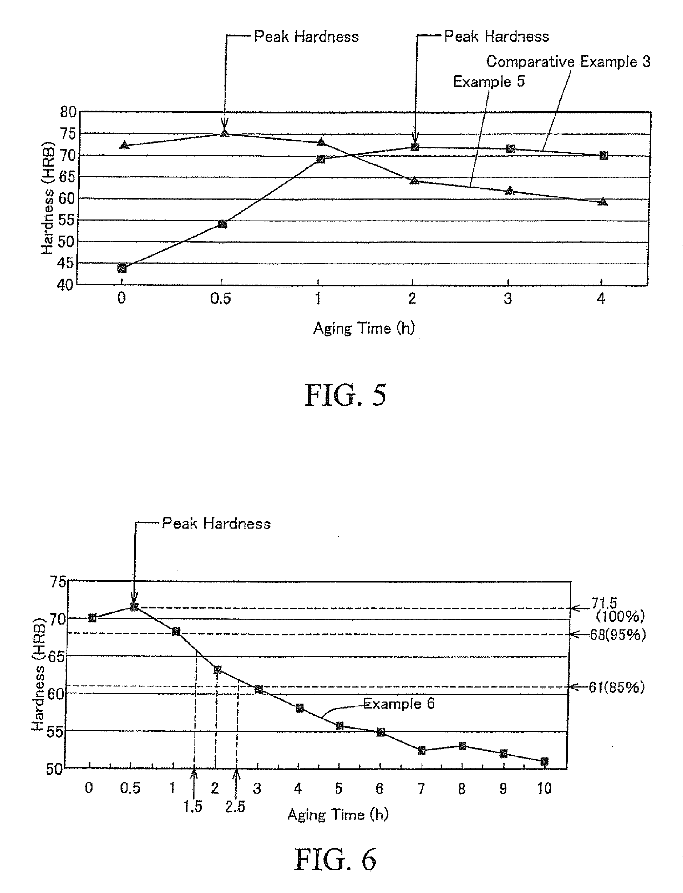

The aluminum alloy having the predetermined composition makes it possible to reduce change with time of the hardness of the material after the solution heat treatment as described above. Therefore, the T8 process can be employed as a production process of a formed material for a brake piston. That is, since the solution heat treatment is not performed after the cold forging processing, it is possible to start the artificial aging treatment immediately after the cold forging processing. Further, since the solution heat treatment is not performed after the cold forging processing, the hardness of the material promptly reaches the peak hardness during the artificial aging treatment (see Fig. 5 which will be described later). Therefore, it is possible to reduce the aging time in the artificial aging treatment.

The rate-limiting of the takt of the integrated production line of the formed material for a brake piston is heat treatment time, namely, the solution heat treatment time and the aging time of the artificial aging treatment. However, in order to achieve a sufficient dissolving state as solid solution, it is difficult to reduce the solution heat treatment time. Non the other hand, since the production method of the present embodiment makes it possible to reduce the aging time of the artificial aging treatment, the aging time can be made shorter than the solution heat treatment time. Accordingly, the rate-limiting of the takt of the integrated production line of the formed material for a brake piston can be made to be the solution heat treatment time. In addition, it is possible to reduce the aging time of the artificial aging treatment so as to be equal to or shorter than the solution heat treatment time. Specifically, the aging time can be made to be 0.3 to 1 times (preferably 0.5 to 0.9 times) of the solution heat treatment time. For example, when the solution heat treatment time is 3 to 5 hours, the aging time can be made to be 2 $\pm$ 0.5 hours. In this manner, it is possible to optimize (minimize) the takt of the integrated production line of the formed material for a brake piston.

Further, by making the hardness of the material after being artificially aged (namely, the formed material for a brake piston) become 85 to 95% of the peak hardness of the material during the artificial aging treatment, it is possible to obtain a formed material for a brake piston having required hardness and high thermal conductivity, namely, high heat dissipation.

The embodiment of the present invention has been described in the above. However, it is needless to say that the present invention is not limited to the above embodiment, and various modifications can be performed within the scope of the present invention.

EXAMPLES

Hereinafter, specific examples of the present invention will be described. However, the present invention is not limited to these examples.

<Evaluation of Circularity of Inner Periphery>

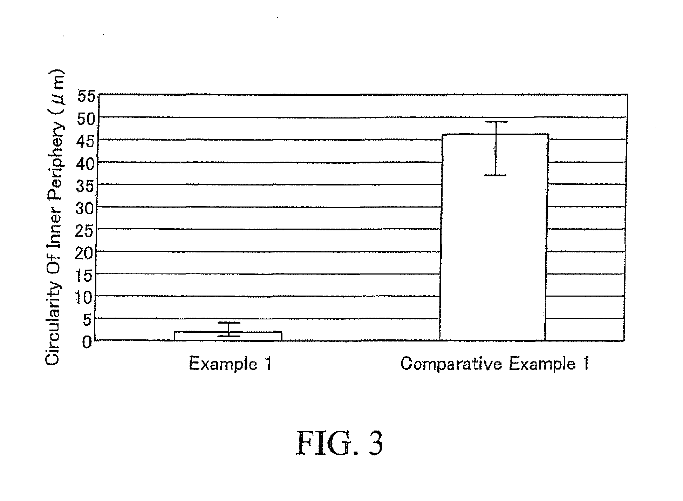

Fig. 3 is a diagram (graph) illustrating the comparison of the circularity of an inner periphery of a material after being artificially aged between Example 1 and Comparative Example 1. In Example 1, with respect to five materials which were artificially aged in accordance with the process sequence of the present embodiment shown in Fig. 1, the circularities of inner peripheries of the respective five materials were averaged. In Comparative Example 1, with respect to five materials which were artificially aged in accordance with the conventional process sequence shown in Fig. 10, the circularities of inner peripheries of the respective five materials were averaged. In Example 1 and Comparative Example 1, a target inner diameter of each of the materials is 28 mm. The measurement of the circularity is performed with reference to JIS(Japanese Industrial Standards) B0021, for example.
In Example 1, a maximum value in the circularities of the inner peripheries of the respective materials was 4 $\mu$m, a minimum value was 1 $\mu$m, and an average value was 2.16 $\mu$m. In Comparative Example 1, a maximum value in the circularities of the inner peripheries of the respective materials was 49 $\mu$m, a minimum value was 37 $\mu$m, and an average value was 46.2 $\mu$m.
The type of each of the materials used in Example 1 and Comparative Example 1 is aluminum alloy. The composition thereof satisfies the above-described composition requirement for aluminum alloy. Further, in Example 1, the condition of the solution heat treatment was 510ºC × 3 hours, the forging processing rate was 50%, and the condition of the artificial aging treatment was 210ºC × 2 hours. In Comparative Example 1, the condition of the O treatment was 380ºC × 3.5 hours, the forging processing rate was 50%, the condition of the solution heat treatment was 510ºC × 3 hours, and the condition of the artificial aging treatment was 210ºC × 2 hours.
As shown in Fig. 3, the circularity of the inner periphery of the material in Example 1 is much higher (the deviation from circular form is much smaller) than that in Comparative Example 1. Therefore, since the circularity of the inner periphery of the material in Example 1 satisfied a preferred standard circularity, that is, 8 $\mu$m or less, it was not necessary to perform the inner cutting for improving the circularity of the inner periphery of the material in the machining step S5.

<Evaluation of Change with Time of Hardness of Material>

Table 1 shows an evaluation result of change with time of the hardness of the material. In each of Example 2 and Example 3 shown in Table 1, with respect to three materials which were artificially aged in accordance with the process sequence of the present embodiment shown in Fig. 1, the hardnesses of the respective three materials were averaged. Time (period) between the solution heat treatment and the artificial aging treatment is 3 days in Example 2, and 3 months in Example 3.
[Table 1]

|  | Time between solution heat treatment and artificial aging treatment | Hardness (HRB) |
|---|---|---|
| Example 2 | 3 days | 66.07 |
| Example 3 | 3 months | 66.39 |

The type of each of the materials used in Example 2 and Example 3 is aluminum alloy. The composition thereof satisfies the above-described composition requirement for aluminum alloy. Further, in each of Example 2 and Example 3, the condition of the solution heat treatment was 510ºC × 3 hours, the forging processing rate was 50%, and the condition of the artificial aging treatment was 210ºC × 2 hours. Further, the hardness of each of the materials is Rockwell hardness (hardness symbol: HRB) measured with reference to "Rockwell hardness test-testing method" of JIS Z2245: 2005. In the measurement, a scale was "B", an indenter was a 1.5875 mm steel ball, and a test load was 980.7 N. The measurement method of the hardness of the material employed in the following is the same as this method.
As shown in Table 1, even when the time between the solution heat treatment and the artificial aging treatment is long, the hardness of the material after being artificially aged was not reduced, and was substantially constant.

Specifically, an increased amount Δ of the hardness of the material was 0.5% (namely, the increased amount Δ = {(66.39-66.07) /66.07} × 100% = 0.5%). That is, the change with time of the hardness of the material after the solution heat treatment is very small. Therefore, it was able to confirm that it is not necessary to promptly and continuously perform the solution heat treatment and the artificially aging treatment in Example 2 and Example 3. The increased amount Δ is particularly desirably 0.5 % or less.

<Evaluation of Electric Conductivity>

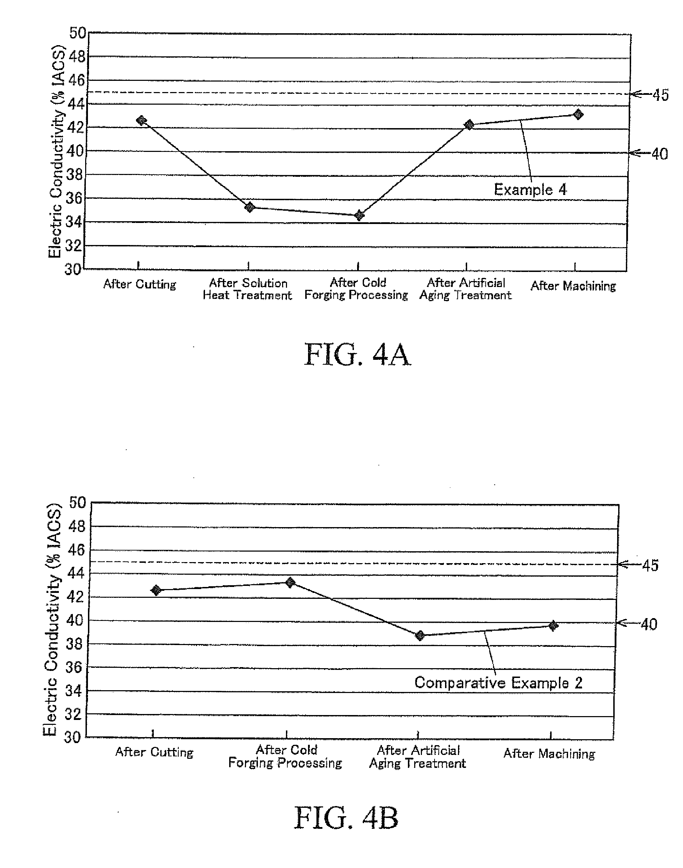

Fig. 4A is a diagram (graph) illustrating the electric conductivity of a material of Example 4. Fig. 4B is a diagram (graph) illustrating the electric conductivity of a material of Comparative Example 2. In Example 4, with respect to six materials which were machined in accordance with the process sequence of the present embodiment shown in Fig. 1, the electric  conductivities of the respective six materials were measured and then averaged in each of the steps. In Comparative Example 2, with respect to six materials which were machined in accordance with the conventional process sequence shown in Fig. 10, the electric conductivities of the respective six materials were measured and then averaged in each of the steps.

The type of each of the materials used in Example 4 and Comparative Example 2 is aluminum alloy. The composition thereof satisfies the above-described composition requirement for aluminum alloy. Further, in Example 4, the condition of the solution heat treatment was 510ºC × 3 hours, the forging processing rate was 50%, and the condition of the artificial aging treatment was 210ºC × 2 hours. In Comparative Example 2, the condition of the O treatment was 380ºC × 3.5 hours, the forging processing rate was 50%, the condition of the solution heat treatment was 510ºC × 3 hours, and the condition of the artificial aging treatment was 210ºC × 2 hours.

As shown in Figs. 4A and 4B, the electric conductivity of the material after being machined (namely, the formed material) in Example 1 is within the range of 40 to 45% IACS which is higher than that in Comparative Example 2. Therefore, in Example 4, it was possible to obtain a formed material for a brake piston having high thermal conductivity, namely, having high heat dissipation.

<Relationship between Aging Time and Hardness of  Material-No. 1>

Fig. 5 is a diagram (graph) illustrating the comparison of a relationship between aging time and the hardness of a material in artificial aging treatment between Example 5 and Comparative Example 3. In Example 5, a material which had been cold forged in accordance with the process sequence of the present embodiment shown in Fig. 1 was artificially aged under the condition of 210ºC of aging temperature. In comparative Example 3, a material which had been cold forged in accordance with the conventional process sequence shown in Fig. 10 was artificially aged under the condition of 195ºC of aging temperature.

The type of each of the materials used in Example 5 and Comparative Example 3 is aluminum alloy. The composition thereof satisfies the above-described composition requirement for aluminum alloy. Further, in Example 5, the condition of the solution heat treatment was 510ºC × 3 hours, and the forging processing rate was 50%. In Comparative Example 1, the condition of the O treatment was 380ºC × 3.5 hours, the forging processing rate was 50%, and the condition of the solution heat treatment was 510ºC × 3 hours.

As shown in Fig. 5, aging time within which the hardness of the material reaches the peak hardness in Example 5 is shorter than that in Comparative Example 3. Therefore, in Example 5, the aging time of the artificial aging treatment can  be reduced. As a result, it is possible to reduce the production cost.

On the other hand, in Comparative Example 3, the aging time within which the hardness of the material reaches the peak hardness is long. Therefore, it is difficult to finish takt time of the integrated production line of the formed material for a brake piston within the solution heat treatment time.

As in Example 5, by performing the artificial aging treatment after the cold forging processing without performing the solution heat treatment, it is possible to accelerate a time for the material to reach the peak hardness thereof. In Example 5, processing distortion occurs in the material by performing the cold forging processing. It is assumed that, by performing the artificial aging treatment with the distortion remaining in the material, precipitation substances are generated mainly in the distorted part of the material, thereby accelerating the time for the material to reach the peak hardness thereof. On the other hand, in Comparative Example 3, since the solution heat treatment is performed after the forging processing, and the artificial aging treatment is thereafter performed, the processing distortion caused by the cold forging processing is cancelled by the solution heat treatment. As a result, it is assumed that the distortion in which the precipitation substances are mainly generated has been cancelled, thereby  decelerating the time for the material to reach the peak hardness thereof.

<Relationship between Aging Time and Hardness of Material-No. 2>

Fig. 6 is a diagram (graph) illustrating a relationship between aging time and the hardness of a material in artificial aging treatment in Example 6. In Example 6, a material which had been cold forged in accordance with the process sequence of the present embodiment shown in Fig. 1 was artificially aged under the condition of 215ºC of aging temperature.

The type of the material used in Example 6 is aluminum alloy. The composition thereof satisfies the above-described composition requirement for aluminum alloy. Further, in Example 6, the condition of the solution heat treatment was 510ºC × 3 hours, and the forging processing rate was 50%.

As shown in Fig. 6, in Example 6, the peak hardness of the material during the artificial aging treatment is 71.5 HRB, and the aging time at this point is 0.5 hours. Further, a formed material for a brake piston generally has to be artificially aged under the condition for overaging treatment due to a request in usage environment thereof. Therefore, it is necessary to artificially aging the material for a period of time that is longer than an aging time of 0.5 hours within which the hardness of the material becomes its peak hardness during the artificial aging treatment. Further, hardness requested by a customer for a formed material for a brake piston, namely, the hardness of the material after being artificially aged is generally within the range of 61 to 68 HRB. Hardness 61 HRB corresponds to 85% of the peak hardness of 71.5 HRB, and hardness 68 HRB corresponds to 95% of the peak hardness of 71.5 HRB.

As can be seen from Fig. 6, when the artificial aging time is set to 2 ± 0.5 hours (namely, 1.5 to 2.5 hours), it is possible to reliably obtain a material (formed material for a brake piston) having hardness within the range of 61 (namely, 85% of the peak hardness of 71.5 HRB) to 68 (namely, 95% of the peak hardness of 71.5 HRB) HRB. Therefore, the required hardness can be reliably satisfied. In other words, it was able to confirm that, in order to reliably satisfy the hardness required for the formed material for a brake piston, it is only necessary to set the hardness of the material at the time of starting the artificial aging treatment so that the hardness of a material obtained by artificially aging the material becomes hardness required for the formed material for a brake piston, and also becomes 85 to 95% of the peak hardness of the material during the artificial aging treatment.

<Evaluation of Hardness of Material after Solution Heat Treatment and at the Time of Starting Artificial Aging Treatment>

Table 2 shows a measurement result of the hardness of a material after the solution heat treatment and the hardness of the material at the time of starting the artificial aging treatment in Example 7. In Example 7, with respect to six materials which have been artificially aged in accordance with the process sequence of the present embodiment shown in Fig. 1, the hardnesses of the respective six materials after the solution heat treatment and the hardnesses of the respective six materials at the time of starting the artificial aging treatment were respectively averaged. Further, in Table 2, a maximum value and a minimum value in each of the hardnesses after the solution heat treatment and the hardnesses at the time of starting the artificial aging treatment are described.

[Table 2]

| | Material | Hardness of material (HRB) | | |
|---|---|---|---|---|
| | | Average | Maximum | Minimum |
| Example 7 | After solution heat treatment | 41.25 | 44.66 | 33.82 |
| | At the time of starting artificial aging treatment | 73.32 | 75.16 | 71.68 |

The type of each of the materials used in Example 7 is aluminum alloy. The composition thereof satisfies the above-described composition requirement for aluminum alloy. Further, in Example 7, the condition of the solution heat treatment was 510ºC × 3 hours, the forging processing rate was 50%, and the condition of the artificial aging treatment was 210ºC × 2 hours.

Further, each of a value of "the maximum hardness of the material after the solution heat treatment"/"the minimum hardness of the material at the time of starting the artificial aging treatment", and a value of "the minimum hardness of the material after the solution heat treatment"/"the maximum hardness of the material at the time of starting the artificial aging treatment" was calculated. The calculated results are shown in Table 3. As shown in Table 3, the former value was 62% and the latter value was 45%. The hardness of the material at the time of starting the artificial aging treatment is the same as the hardness of the material after the cold forging treatment. Therefore, "the hardness of the material after the solution heat treatment"/"the hardness of the material at the time of starting the artificial aging treatment" is the same as "the hardness of the material after the solution heat treatment"/"the hardness of the material after the cold forging processing", and the calculated value thereof indicates the inverse of work hardening rate $\gamma$.

[Table 3]

| Example 7 | "Maximum hardness of material after solution heat treatment"/"Minimum hardness of material at the time of starting artificial aging treatment": 62% |
|---|---|
| | "Minimum hardness of material after solution heat treatment"/"Maximum hardness of material at the time of starting artificial aging treatment": 45% |

Therefore, by setting the condition of the solution heat treatment so that the hardness of a material obtained by solution heat treating the material (namely, the hardness of the material after being solution heat treated) becomes 40 to 65% (particularly desirably 45 to 62%) of the hardness of the material at the time of starting the artificial aging treatment, it is possible to obtain desired hardness in the material at the time of starting the artificial aging treatment. In other words, it was able to confirm that, in order to obtain desired hardness of the material at the time of starting the artificial aging treatment, it is only necessary to set the condition of the solution heat treatment so that the hardness of a material obtained by solution heat treating the material becomes 40 to 65% (particularly desirably 45 to 62%) of the hardness of the material at the time of starting the artificial aging treatment.

Table 4 shows a measurement result of the hardness of the material after the solution heat treatment and the hardness of the material at the time of starting the artificial aging treatment in Example 8. In Example 8, with respect to different five regions in a material which was artificially aged in accordance with the process sequence of the present embodiment shown in Fig. 1, the hardnesses of the respective five regions after the solution heat treatment and the hardnesses of the respective five regions at the time of starting the artificial aging treatment were respectively averaged.

[Table 4]

| | Material | Hardness of material (HRB) |
|---|---|---|
| Example 8 | After solution heat treatment | 40 |
| | At the time of starting artificial aging treatment | 75 |

The type of the material used in Example 8 is aluminum alloy. The composition thereof satisfies the above-described composition requirement for aluminum alloy. Further, in Example 8, the condition of the solution heat treatment was 510ºC $\times$ 3 hours, the forging processing rate was 50%, and the condition of the artificial aging treatment was 210ºC $\times$ 2 hours.

Further, a value of "the average hardness of the material after the solution heat treatment"/"the average hardness of the material at the time of starting the artificial aging treatment" was calculated. The calculated result is shown in Table 5. As shown in Table 5, the calculated value was 53%. This value indicates the inverse of work hardening rate $\gamma$ as described above.

[Table 5]

| Example 8 | "Average hardness of material after solution heat treatment"/"Average hardness of material at the time of starting artificial aging treatment": 53% |
|---|---|

As can be seen also from Example 8, by setting the condition of the solution heat treatment so that the hardness of a material obtained by solution heat treating the material (namely, the hardness of the material after being solution heat treated) becomes 40 to 65% (particularly desirably 45 to 62%) of the hardness of the material at the time of starting the artificial aging treatment, it is possible to obtain desired hardness of the material at the time of starting the artificial aging treatment. In other words, it was able to confirm that, in order to obtain desired hardness of the material at the time of starting the artificial aging treatment, it is only necessary to set the condition of the solution heat treatment so that the material obtained by solution heat treating the material becomes 40 to 65% (particularly desirably 45 to 62%) of the hardness of the material at the time of starting the artificial aging treatment.

<Evaluation of Composition of Aluminum Alloy>

In Examples 11 to 17, aluminum alloy materials having various compositions were artificially aged in accordance with the process sequence of the present embodiment shown in Fig. 1. Then, the hardness HRB, the circularity of the inner periphery, and the electric conductivity of each of the materials were measured. The measurement results are shown in Table 6. In Examples 11 to 17, a target inner diameter is 28 mm.

[Table 6]

| | Ingredient (mass%) | | | | | Solution heat treatment condition | Forging processing rate (%) | Artificial aging treatment condition | Hardness (HRB) | Circularity of inner periphery (μm) | Electric conductivity (% IACS) |
|---|---|---|---|---|---|---|---|---|---|---|---|
| | Si | Fe | Cu | Mn | Mg | | | | | | |
| Example 11 | 8.98 | 0.25 | 0.71 | 0.002 | 0.3 | 510°C × 3h | 55 | 210°C × 2h | 63.7 | 1 | 45 |
| Example 12 | 10.41 | 0.21 | 0.89 | 0.017 | 0.49 | 510°C × 3h | 50 | 210°C × 2h | 67.5 | 4 | 43.3 |
| Example 13 | 10.54 | 0.50 | 1.09 | 0.14 | 0.69 | 510°C × 3h | 45 | 210°C × 2h | 68.7 | 1 | 40 |
| Example 14 | 9.8 | 0.27 | 0.8 | 0.01 | 0.5 | 505°C × 3h | 50 | 210°C × 2h | 63.8 | 1 | 43.1 |
| Example 15 | 9.8 | 0.27 | 0.8 | 0.01 | 0.5 | 515°C × 3h | 50 | 210°C × 2h | 65.8 | 2 | 42.5 |
| Example 16 | 9.8 | 0.27 | 0.8 | 0.01 | 0.5 | 510°C × 3h | 50 | 205°C × 2h | 66.6 | 2 | 41.9 |
| Example 17 | 9.8 | 0.27 | 0.8 | 0.01 | 0.5 | 510°C × 3h | 50 | 215°C × 2h | 65.6 | 2 | 42.5 |

In "Solution heat treatment condition" in Table 6, a condition of the solution heat treatment applied in each of the examples is shown. In "Forging processing rate", a forging processing rate of the cold forging processing applied in each of the examples is shown. In "Artificial aging treatment condition", a condition of the artificial aging treatment applied in each of the examples is shown.

As can be seen from Examples 11 to 17, when the composition of the aluminum alloy constituting the material satisfies the above-described composition requirement for aluminum alloy, the condition of the solution heat treatment is 510 ± 10ºC of heat treatment temperature and 3 hours or more of heat treatment time, and the condition of the artificial aging treatment is 210 ± 10ºC of aging temperature and 2 ± 0.5 hours of aging time, it was possible to reliably improve the hardness of the material, improve the circularity of the inner periphery of the material, and obtain high electric conductivity (namely, high thermal conductivity and high heat dissipation).

<Example of Determination Method of Production Condition>

Next, an example of a determination method of a production condition used in the method for producing a formed material for a brake piston of the present embodiment will be described below with reference to the results in the above examples. In the following description, "product" indicates a formed material for a brake piston. Further, "aging peak hardness" indicates peak hardness of the material during the artificial aging treatment.

First, preconditions A to D will be described below.

A. The work hardening rate $\gamma$ is determined in the following manner. Specifically, the shape of a product (a formed material for a brake piston) is determined by presentation by a customer. Accordingly, since cold forging processing applied in producing the product is closed-type, the volume of a material for the product is determined. Then, the shape of the material is determined by the volume of the material and the diameter of an aluminum alloy continuous casting material or the like for obtaining the material. Further, the forging processing rate is determined by the determined shapes of the material and the product. By determining the forging processing rate in this manner, the work hardening rate $\gamma$ is determined. In adjustment of the work hardening rate $\gamma$, it is also possible that the work hardening rate $\gamma$ is adjusted by changing the diameter of the aluminum alloy continuous casting material or the like, thereby adjusting the forging processing rate.

B. The mechanical property (especially, the hardness) of the product is determined by a request by the customer.

C. The composition of the aluminum alloy constituting the material is determined by such requirements that the mechanical property (especially, the hardness) required for the product can be obtained and change with time of the hardness of the material after the solution heat treatment is reduced. Further, with the determined composition, an upper limit of the solution heat treatment temperature at which burning does not occur during the solution heat treatment, and solution heat treatment time within which a sufficient dissolving state as solid solution can be obtained are determined. Among the additive elements in this aluminum alloy, an element that has the largest influence on the hardness is Cu. As an upper limit of the solution heat treatment temperature at which Cu is dissolved as solid solution as much as possible and burning does not occur during the solution heat treatment, a temperature of 510 ± 10ºC can, for example, be employed. Incidentally, a lower limit of the solution heat treatment temperature is a temperature at which Cu can be dissolved as solid solution.

D. An object is to optimize (minimize) the takt of the integrated production line of the product, thereby making it possible to easily produce the product.

Next, definition required for the understanding of the determination method of the production condition will be described.

A production history of the product (material → solution heat treatment → cold forging processing → artificial aging treatment) and change of the hardness of the product (material) can be expressed by the following formula 1.

$$\text{Hardness of Product} = \alpha \times \beta \times \gamma \times \text{Hardness of Material}$$

$$\text{after Solution Heat Treatment} \cdots \text{(Formula 1)}$$

$\alpha$: Hardness of Product/Aging Peak Hardness
$\beta$: Aging Peak Hardness/Hardness of Material at the Time of Starting Artificial Aging Treatment
$\gamma$: Hardness of Material after Cold Forging Processing/ Hardness of Material after Solution Heat Treatment.

Further, the hardness of the material before being solution heat treated is defined as "H1". The hardness of the product, namely, the hardness of the material after being artificially aged is defined as "H4". The aging time is defined as "T4". Further, the hardness of the material after being cold forged is the same as the hardness of the material at the time of starting the artificial aging treatment.

As can be understood from the definition of $\gamma$, $\gamma$ indicates the work hardening rate. The fact that the hardness of a material obtained by solution heat treating the material (namely, the hardness of the material after being solution heat treated) is 40 to 65% of the hardness of the material at the time of starting the artificial aging treatment means that the inverse of the work hardening rate $\gamma$ is 40 to 65%, in other words, means that $\gamma = 1/ (0.4$ to $0.65)$.

Next, an example of the determination method will be described below.

-Example of Determination Method of $\alpha$-

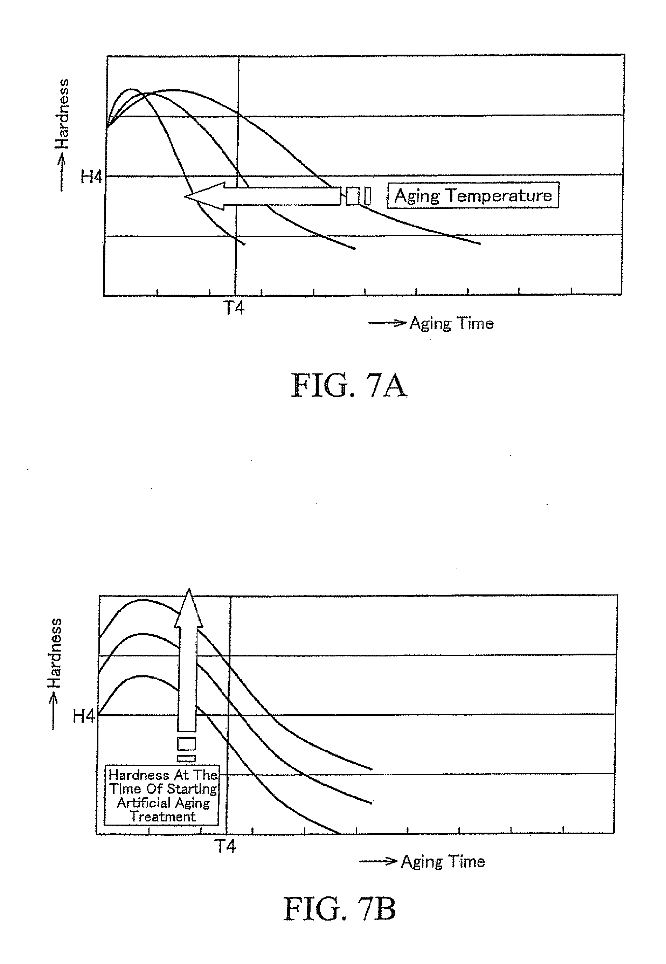

As shown in Fig. 7A, an optimal point (H4, T4) of the hardness of the product versus the aging time is determined by the above preconditions B and D. In the aging curve, when the aging temperature is changed, inclination of the aging curve and reaching time to the aging peak hardness change. More specifically, when the aging temperature is made higher, the aging curve is downsized toward a direction indicated by a schematic white arrow (left direction). Further, as shown in Fig. 7B, in the aging curve, when the hardness of the material at the time of starting the artificial aging treatment is changed, the aging peak hardness changes. That is, when the hardness of the material at the time of starting the artificial aging treatment is made higher, the aging curve is displaced in parallel in a direction indicated by a schematic white arrow (upper direction), with which the aging peak hardness increases.

In light of such property of the aging curve, a plurality of aging temperatures and hardnesses of the material at the time of starting the artificial aging treatment are selected so that the aging curve passes through the optimal point (H4, T4) .

Further, in order to make the hardness of a material obtained by artificially aging the material (namely, the hardness of the material after being artificially aged) become hardness required for the formed material for a brake piston (product), and also become 85 to 95% (particularly desirably 86 to 93%) of the peak hardness of the material during the artificial aging treatment, an aging curve that satisfies a requirement of $\alpha = 0.85$ to 0.95 (particularly desirably 0.86 to 0.93) is selected from the aging curves passing through the optimal point (H4, T4).

a. In order to satisfy a request in usage environment of the product (the formed material for a brake piston), the optimal point (H4, T4) is required to lie in an overaging region. Further, in order to reliably satisfy the hardness required for the product, hardness at the optimal point (H4, T4) is desirably 95% or less of the peak hardness.

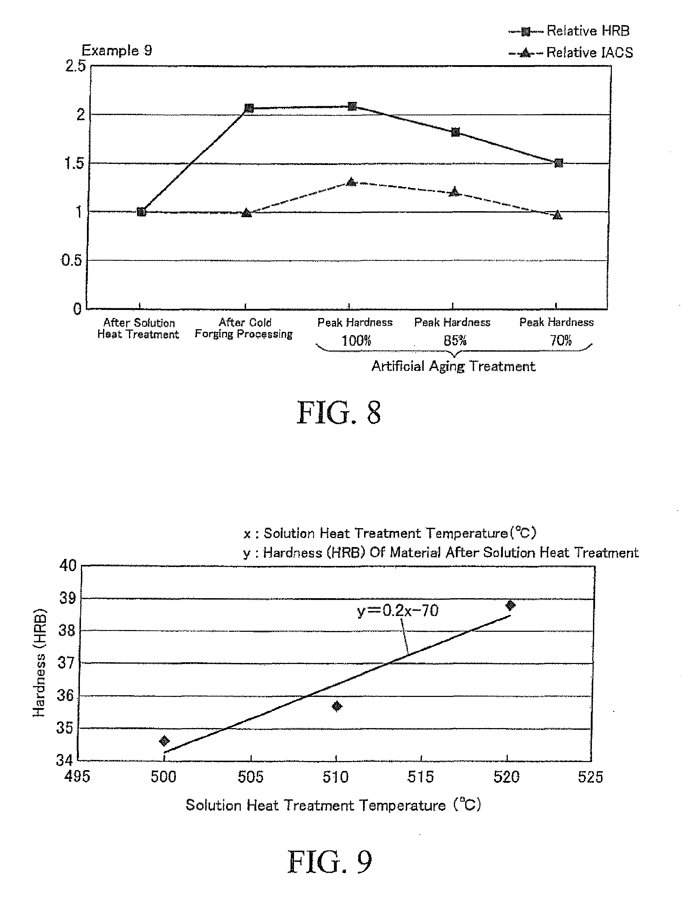

b. The hardness at the optimal point (H4, T4) is desirably 85% or more of the peak hardness. A reason thereof will be described with reference to Table 7 and Fig. 8 as follows.

[Table 7]

| | | | After solution heat treatment | After cold forging processing | Peak hardness during artificial aging treatment | | |
| | | | | | 100% | 85% | 70% |
|---|---|---|---|---|---|---|---|
| Electric conductivity | %IACS | | 35.5 | 34.5 | 47 | 42.5 | 35 |
| | Relative IACS | | 1 | 0.97 | 1.32 | 1.2 | 0.99 |
| | Relative IACS No. 2 | | | | 1 | 0.9 | 0.74 |
| Hardness | HRB | | 35 | 74 | 75 | 64 | 53 |
| | Relative HRB | | 1 | 2.11 | 2.14 | 1.83 | 1.51 |
| | Relative HRB No. 2 | | | | 1 | 0.85 | 0.71 |

Table 7 shows an experiment result regarding change of the electric conductivity and the hardness of a material of Example 9. Fig. 8 is a diagram (graph) illustrating the electric conductivity and the hardness of the material of Example 9. The type of the material used in Example 9 is aluminum alloy. The composition thereof satisfies the above-described composition requirement for aluminum alloy. Further, in Example 9, the condition of the solution heat treatment was 510ºC × 3 hours, the forgingprocessing rate was 50%, and the artificial aging treatment temperature was 210ºC. The relative IACS is electric conductivity of the material when electric conductivity of the material after being solution heat treated is defined as 1. The relative IACS No. 2 is electric conductivity of the material when electric conductivity of the material has peak hardness during the artificial aging treatment (when the hardness of the material is 100% of the peak hardness) is defined as 1. The relative HRB is hardness of the material when hardness of the material after being solution heat treated is defined as 1. The relative hardness No. 2 is hardness of the material when hardness of the material has peak hardness (100% of the peak hardness) during the artificial aging treatment is defined as 1.

As shown in Table 7 and Fig. 8, the material has the highest electric conductivity when the material has the peak hardness (100% of the peak hardness) during the artificial aging treatment along with the hardness of the material. Further, the electric conductivity sequentially decreases when the hardness is 85% of the peak hardness, and 75% of the peak hardness in this order.

The hardness of the material becomes extremely high when the process is transferred to the completion of the cold forging processing from the completion of the solution heat treatment. Therefore, the hardness of the material is largely affected by the work hardening rate $\gamma$ by the cold forging processing rather than the aging time. On the other hand, the electric conductivity of the material does not change much when the process is transferred to the completion of the cold forging processing from the completion of the solution heat treatment. Therefore, the electric conductivity is largely affected by the aging time rather than the work hardening rate $\gamma$. Accordingly, in order to increase the electric conductivity, namely, increase the thermal conductivity, it is necessary to control the artificial aging treatment time, and it is desirable not to reduce the electric conductivity which has been made high by the artificial aging treatment as far as possible. Therefore, in the hardness corresponding to the electric conductivity, the hardness at the optimal point (H4, T4) is preferably 85% or more of the peak hardness.

-Example of Determination Method of $\beta$-

$\beta$ is determined by the selected aging curve. For example, in the case of Example 5 and Example 6 respectively illustrated in Fig. 5 and Fig. 6, $\beta$ is determined as 1/(0.95 to 0.99).

-Example of Determination Method of $\gamma$-

As described above, $\gamma$ indicates the work hardening rate, and is therefore determined by the shape of the material after being solution heat treated and the shape of the material after being cold forged. In the present embodiment, it is desirable to satisfy a requirement of $\gamma = 1/(0.4$ to $0.65)$.

-Example of Determination Method of $\alpha$, $\beta$ and $\gamma$-

Therefore, $\alpha$, $\beta$ and $\gamma$ are determined as follows.

$\alpha : \beta : \gamma = (0.85$ to $0.95) : 1/(0.95$ to $0.99) : 1/(0.4$ to $0.65)$

Therefore, by setting the hardness of the material after being solution heat treated so as to satisfy the above formula 1, it is possible to produce a formed material for a brake piston (product) having required hardness and high thermal conductivity (namely, high heat dissipation). In addition, it is possible to optimize the takt of the integrated production line of the formed material for a brake piston.

-Determination Method of Condition of Solution Heat Treatment-

A determination method of the solution heat treatment temperature as a condition of the solution heat treatment is as follows. Specifically, a material that satisfies the above-described composition requirement for aluminum alloy is used, and a graph illustrating a relationship between the hardness of the material after being solution heat treated and the solution heat treatment temperature as shown in Table 8 and Fig. 9 is prepared by performing a preliminary experiment. Further, on the basis of the graph, the solution heat treatment temperature is determined so that the hardness of the material after being solution heat treated becomes hardness that satisfies the above formula 1.

The solution heat treatment time as the condition of the solution heat treatment is difficult to be reduced in order to achieve a sufficient dissolving state as solid solution. Therefore, solution heat treatment time applied in each of Reference Examples 1 to 3 is 3 hours.

[Table 8]

|  | Solution heat treatment temperature (°C) | Hardness (HRB) |
|---|---|---|
| Reference example 1 | 500 | 34.6 |
| Reference example 2 | 510 | 35.7 |
| Reference example 3 | 520 | 38.8 |

The present application claims priority to Japanese Patent Application No. 2010-285706 filed on December 22, 2010, and the disclosure thereof is incorporated herein by reference in its entirety.

It should be understood that the terms and expressions used herein are used for illustrative purposes and have no intention to be used to construe the scope of the invention in a limited manner, do not eliminate any equivalents of the features shown and mentioned herein, and allow various modifications falling within the claimed scope of the present invention.

While the present invention may be embodied in many different forms, a number of illustrative embodiments are described herein with the understanding that the present disclosure is to be considered as providing examples of the principles of the invention and such examples are not intended to limit the invention to preferred embodiments described herein and/or illustrated herein.

While illustrative embodiments of the present invention have been described herein, the present invention is not limited to the various preferred embodiments described herein, but includes any and all embodiments having equivalent elements, modifications, omissions, combinations (e.g., of aspects across various embodiments), adaptations and/or alterations as would be appreciated by those skilled in the art based on the present disclosure. The limitations in the claims are to be interpreted broadly on the basis of the terms employed in the claims and not limited to examples described in the present specification or during the prosecution of the application, which examples are to be construed as non-exclusive. For example, in the present disclosure, the term "preferably" is non-exclusive and means "preferably, but not limited to". In this disclosure and during the prosecution of the present application, means-plus-function or step-plus-function limitations will only be employed where, for a specific claim limitation, all of the following conditions are present in that limitation: a) "means for" or "step for" is expressly recited; b) a corresponding function is expressly recited; and c) structure, material or acts that support that structure are not recited. In this disclosure and during the prosecution of the present application, the term "present invention" or "invention" may be used as a reference to one or more aspect within the present disclosure. The term "present invention" or "invention" should not be improperly interpreted as an identification of criticality, should not be improperly interpreted as applying across all aspects or embodiments (i.e., it should be understood that the present invention has a number of aspects and embodiments), and should not be improperly interpreted as limiting the scope of the application or claims. In the present disclosure and during the prosecution of the present application, the term "embodiment" can be used to describe any aspect, feature, process or step, any combination thereof, and/or any portion thereof, etc. In some examples, various embodiments may include overlapping features. In this disclosure and during the prosecution of the present application, the following abbreviations may be employed: "e.g." which means "for example;" and "NB" which means "note well".

## INDUSTRIAL APPLICABILITY

The present invention can be applied to a method for producing a formed material for a brake piston, and also to a formed material for a brake piston.

## DESCRIPTION OF THE REFERENCE NUMERALS

1    cold forging processing apparatus
2    punch
5    molding die
10    material

## Claims

1.  A method for producing a formed material for a brake piston, the method comprising:

    solution heat treating an aluminum alloy material containing 9.0 to 11.0 mass% Si, 0.5 mass% or less Fe, 0.7 to 1.1 mass% Cu, 0.15 mass% or less Mn, and 0.3 to 0.7 mass% Mg, with the balance being Al and inevitable impurities and thereafter;
    cold forging the material; and thereafter
    artificially aging the material.

2.  The method for producing a formed material for a brake piston according to claim 1, wherein the material is artificially aged under a condition of 210 $\pm$ 10ºC of aging temperature and 2 $\pm$ 0.5 hours of aging time.

3. The method for producing a formed material for a brake piston according to claim 1 or 2, wherein the material is solution heat treated under a condition of 510 $\pm$ 10ºC of heat treatment temperature and 3 hours or more of heat treatment time.

4. A method for producing a formed material for a brake piston, the method comprising production steps of:

solution heat treating an aluminum alloy material containing 9.0 to 11.0 mass% Si, 0.5 mass% or less Fe, 0.7 to 1.1 mass% Cu, 0.15 mass% or less Mn, and 0.3 to 0.7 mass% Mg, with the balance being Al and inevitable impurities and thereafter;
cold forging the material; and thereafter
artificially aging the material under a condition for overaging treatment,
wherein, in the production steps,
hardness of the material at the time of starting the artificial aging treatment is set so that hardness of the material after being artificially aged becomes hardness required for a formed material for a brake piston, and 85 to 95% of peak hardness of the material during the artificial aging treatment, and
a condition of the solution heat treatment is set so that hardness of the material after being solution heat treated becomes 40 to 65% of the hardness of the material at the time of starting the artificial aging treatment.

5. A formed material for a brake piston, the material being produced by the method for producing a formed material for a brake piston according to any one of claims 1 to 4.

6. The formed material for a brake piston according to claim 5, wherein electric conductivity of the material is 40 to 45% IACS.

FIG. 1

FIG. 2A

FIG. 2B

A₁

10

FIG. 2C

B₂    B₃

10

12

B₄

B₅

11

B₁

FIG. 2D

FIG. 3

FIG. 4A

FIG. 4B

FIG. 5

FIG. 6

FIG. 7A

FIG. 7B

Example 9

FIG. 8

FIG. 9

```
                                          S101
          ┌─────────────────────────────┐
          │           Cutting           │
          └─────────────────────────────┘
                         │
                         ▼            S102
          ┌─────────────────────────────┐
          │         O Treatment         │
          └─────────────────────────────┘
                         │
                         ▼            S103
          ┌─────────────────────────────┐
          │   Cold Forging Processing   │
          └─────────────────────────────┘
                         │
                         ▼            S104
          ┌─────────────────────────────┐
          │   Solution Heat Treatment   │
          └─────────────────────────────┘
                         │
                         ▼            S105
          ┌─────────────────────────────┐
          │  Artificial Aging Treatment │
          └─────────────────────────────┘
                         │
                         ▼            S106
          ┌─────────────────────────────┐
          │          Machining          │
          │   (Including Inner Cutting) │
          └─────────────────────────────┘
```

# FIG. 10

## INTERNATIONAL SEARCH REPORT

| | International application No. |
|---|---|
| | PCT/JP2011/079543 |

**A. CLASSIFICATION OF SUBJECT MATTER**
*C22F1/043*(2006.01)i, *C22C21/02*(2006.01)i, *B21J1/04*(2006.01)i, *B21J5/00* (2006.01)i, *F16D65/14*(2006.01)i, *F16D65/18*(2006.01)i

According to International Patent Classification (IPC) or to both national classification and IPC

**B. FIELDS SEARCHED**

Minimum documentation searched (classification system followed by classification symbols)
C22F1/04-1/057, C22C21/00-21/18, B21J1/04, B21J5/00, F16D65/14, F16D65/18

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 11-043798 A (Fujikura Ltd., Kabushiki Kaisha Miyaki), 16 February 1999 (16.02.1999), claims; paragraph [0001] (Family: none) | 1-6 |
| A | JP 2004-232087 A (Showa Denko Kabushiki Kaisha), 19 August 2004 (19.08.2004), claims; paragraph [0078] & US 2005/0109429 A1 & EP 1715084 A1 & WO 2005/049896 A1 | 1-6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 March, 2012 (22.03.12) | 03 April, 2012 (03.04.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2011/079543 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2001-059124 A  (Nippon Light Metal Co., Ltd.),<br>06 March 2001 (06.03.2001),<br>claims; fig. 2<br>(Family: none) | 1-6 |
| P,A | WO 2011/078080 A1  (Showa Denko Kabushiki Kaisha),<br>30 June 2011 (30.06.2011),<br>claims; paragraphs [0044], [0045]; fig. 4<br>(Family: none) | 1-6 |

Form PCT/ISA/210 (continuation of second sheet) (July 2009)

## REFERENCES CITED IN THE DESCRIPTION

### Patent documents cited in the description

- JP 2010285706 A

### Non-patent literature cited in the description

- Structure and Property of Aluminium. The Japan Institute of Light Metals, 30 November 1991, 282
- The Fundamentals of Aluminum Materials and Industrial Technology. 01 May 1985, 169
- Rockwell hardness test-testing method. *JIS Z2245,* 2005